# DEMANDE DE BREVET EUROPEEN

(11) **EP 1 351 152 A1**
(43) Date de publication de la demande: **08.10.2003**
(21) Numéro de dépôt: 03290810.5
(22) Date de dépôt: 31.03.2003
(51) Int. Cl.: G06F 13/42

(54) **Dispositif et procédé pour synchroniser un échange de données avec un organe distant**

(30) Priorité: 02.04.2002 FR 0204070
(71) Demandeur: STMicroelectronics S.A., 92120 Montrouge (FR)
(72) Inventeur: Graciannette, Nicolas, 38240 Meylan (FR); Marchand, Benoit, 38000 Grenoble (FR)
(74) Mandataire: Loisel, Bertrand

(57) **Abrégé**

Pour synchroniser sur un signal d'horloge de référence, un échange de données avec un organe distant (2), le dispositif comprend une ligne à retard variable (5) dite principale, contrôlée par une première unité de traitement (7) à partir d'un comparateur de phase (6) pour générer un signal d'horloge retardé transmis à l'organe distant (2), une entrée de ladite ligne à retard variable principale recevant le signal d'horloge de référence. Plus particulièrement, le dispositif comprend une première borne (12) pour recueillir une image de signal d'horloge reçu par l'organe distant, une première ligne à retard variable auxiliaire (14) dont une entrée est reliée à la première borne et dont une sortie est reliée à une première entrée du comparateur de phase, une deuxième ligne à retard variable auxiliaire (16) dont une entrée est reliée à l'entrée de ligne à retard variable principale et dont une sortie est reliée à une deuxième entrée du comparateur de phase, et une deuxième unité de traitement (15) agencée pour contrôler la première et la deuxième ligne à retard variable auxiliaire de façon à ce que ladite image de signal reçu par l'organe distant est décalée par rapport au signal d'horloge de référence, d'une phase propre à synchroniser l'échange de données sur le signal d'horloge de référence.

## Description

Le domaine de l'invention est celui de la synchronisation d'échange de données entre un organe local et un organe distant. Généralement, l'organe local dispose d'un signal d'horloge de référence qui est transmis à l'organe distant pour participer à l'échange de données.

Le problème est que l'organe distant reçoit le signal d'horloge de référence avec un certain retard par rapport à sa génération dans l'organe local. Ce retard fait que les signaux d'horloge dans l'organe local et dans l'organe distant, ne sont plus en phase.

Par exemple, l'organe local est un contrôleur mémoire hébergé dans un circuit intégré et l'organe distant est une mémoire synchrone telle que parmi les mémoires connues, une mémoire SDRAM. Le circuit intégré qui héberge le contrôleur mémoire et le circuit intégré qui héberge la mémoire, sont disposés sur un circuit imprimé, reliés par des pistes ayant des caractéristiques résistives, capacitives et inductives propres à générer un certain retard sur les signaux transmis. Aux fréquences toujours plus élevées d'échange entre les circuits, ces retards ont une influence considérable sur la synchronisation des signaux.

Un moyen connu de résoudre ce problème est d'introduire volontairement un retard dans l'organe local avant transmission du signal d'horloge et de régler ce retard de façon à compenser le retard incontrôlable à l'extérieur du circuit intégré qui héberge l'organe local, de façon à ce que le signal d'horloge dans l'organe distant ait une phase propre à assurer la synchronisation de l'échange de données.

Généralement, on reboucle le signal soumis au retard extérieur incontrôlable, sur le signal d'horloge de référence en entrée d'un comparateur de phase. Le retard introduit dans l'organe local, est réglé de façon à annuler la différence de phase en entrée du comparateur de phase. L'inconvénient de cette solution est qu'elle permet de n'asservir le retard sur le signal soumis au retard incontrôlable extérieur, qu'en annulant la différence de phase en entrée du comparateur. Une telle solution pose problème lorsque les données, par exemple générées par l'organe distant, sont valables dans une fenêtre de validité, c'est-à-dire dans une plage qui précède, succède ou se superpose au front d'horloge. Il est alors difficile d'imposer en entrée du comparateur de phase, une différence de phase autre qu'une valeur nulle.

Un premier objet de l'invention est un dispositif pour synchroniser sur un signal d'horloge de référence, un échange de données avec un organe distant, comprenant une ligne à retard variable dite principale, contrôlée par une première unité de traitement pour générer un signal d'horloge retardé transmis à l'organe distant de façon à annuler une différence en entrée d'un comparateur de phase, une entrée de ladite ligne à retard variable principale recevant le signal d'horloge de référence. Le dispositif est remarquable en ce qu'il comprend:
- une première borne pour recueillir une image de signal d'horloge reçu par l'organe distant,
- une première ligne à retard variable auxiliaire dont une entrée est reliée à ladite première borne et dont une sortie est reliée à une première entrée du comparateur de phase,
- une deuxième ligne à retard variable auxiliaire dont une entrée est reliée à l'entrée de ligne à retard variable principale et dont une sortie est reliée à une deuxième entrée du comparateur de phase,
- une deuxième unité de traitement agencée pour contrôler la première et la deuxième ligne à retard variable auxiliaire de façon à ce que ladite image de signal reçu par l'organe distant est décalée par rapport au signal d'horloge de référence, d'une phase propre à synchroniser l'échange de données sur le signal d'horloge de référence.

Ainsi, lorsque les signaux sont en phase en entrées du comparateur de phase, c'est à dire en sortie de chacune des lignes à retard variable auxiliaires, l'image de signal d'horloge reçue par l'organe distant est décalé en entrée de la première ligne à retard variable auxiliaire, par rapport au signal d'horloge de référence en entrée de la deuxième ligne à retard variable auxiliaire, d'un retard égal à la différence des retards générés par les lignes à retard auxiliaires. La deuxième unité de traitement permet d'ajuster cette différence de retard avec une grande précision de façon à décaler l'image de signal reçu par l'organe distant par rapport au signal d'horloge de référence, d'une phase propre à synchroniser l'échange de données sur le signal d'horloge de référence.

Avantageusement, le dispositif selon l'invention comprend un commutateur inséré entre ladite première borne et ladite entrée de première ligne à retard variable de façon à pouvoir connecter ladite entrée de première ligne à retard variable sur une sortie de ladite ligne à retard variable principale.

Ce commutateur permet de calibrer si besoin les lignes à retard auxiliaires.

Avantageusement encore, indépendamment de la présence ou non du commutateur, la deuxième unité de traitement comprend une entrée pour recevoir un signal de reconnaissance de données de façon à ajuster le retard de la première ou de la deuxième ligne à retard variable auxiliaire pour que le signal de reconnaissance de données indique une concordance de données.

Cette entrée permet directement de régler les lignes à retard variable auxiliaires, qu'elles soient calibrées ou non.

Avantageusement aussi, ladite première borne comprend:
- un premier amplificateur d'isolation galvanique dont une entrée est reliée à une sortie de ladite ligne à retard variable principale et dont une sortie est prévue pour être reliée à une piste de transmission vers l'organe distant,
- un deuxième amplificateur d'isolation galvanique dont une entrée est reliée à ladite sortie du premier amplificateur d'isolation galvanique et dont une sortie est reliée à l'entrée de ladite première ligne à retard variable auxiliaire.

Le deuxième amplificateur d'isolation galvanique permettant de recueillir une image de signal d'horloge reçu par l'organe distant, le premier amplificateur d'isolation galvanique permet de transmettre le signal d'horloge retardé à l'organe distant sans câblage supplémentaire.

Un autre objet de l'invention est un procédé pour synchroniser sur un signal d'horloge de référence, un échange de données avec un organe distant, en générant un signal d'horloge retardé transmis à l'organe distant avec un retard dit principal par rapport au signal d'horloge de référence, ledit retard principal étant fonction d'un signal de commande pour annuler une différence de phases reçues en entrée d'un comparateur de phases. Le procédé est remarquable en ce que:
- une image de signal d'horloge reçu par l'organe distant, est soumise à un premier retard dit auxiliaire en régime établi,
- le signal d'horloge de référence est soumis à un deuxième retard dit auxiliaire,
- ladite différence de phases reçues en entrée du comparateur de phases est une différence de phase entre l'image de signal d'horloge reçu soumise au dit premier retard auxiliaire et le signal d'horloge de référence soumis au dit deuxième retard auxiliaire, de sorte que ladite image de signal d'horloge reçu par l'organe distant, est décalée par rapport au signal d'horloge de référence, d'une phase propre à synchroniser l'échange de données sur le signal d'horloge de référence en régime établi.

Avantageusement dans une première étape de régime préparatoire hors régime établi:
- ledit signal d'horloge retardé est soumis au dit premier retard auxiliaire,
- ledit deuxième retard auxiliaire est pris égal au dit premier retard auxiliaire,
- différentes valeurs du dit signal de commande sont relevées, chacune pour une fréquence différente du signal d'horloge de référence, de façon à reconnaître une loi de variation du dit retard principal, alors égal à une période d'horloge, en fonction du signal de commande.

Avantageusement encore dans une deuxième étape de régime préparatoire:
- l'image de signal d'horloge reçu par l'organe distant, est soumise au dit premier retard auxiliaire,
- une succession d'au moins un échange de données connues avec l'organe distant, est activée en faisant varier le premier et ou le deuxième retard auxiliaire jusqu'à détecter une synchronisation d'échange de données connues.

Avantageusement aussi, hors de ladite première étape de régime préparatoire, deux valeurs sont attribuées chacune respectivement au premier et au deuxième retard auxiliaire de sorte que la différence des deux valeurs correspond à une fenêtre a priori connue de synchronisation d'échanges de données.

L'invention sera mieux comprise dans la description d'un exemple de mise en oeuvre décrit ci-après en référence aux dessins annexés dans lesquels:
- la figure 1 est un schéma de dispositif possible de l'état de la technique;
- la figure 2 est un schéma qui montre une intégration de dispositif conforme à l'invention dans un environnement préféré;
- la figure 3 est un schéma de dispositif conforme à l'invention;
- la figure 4 est un organigramme de procédé conforme à l'invention.

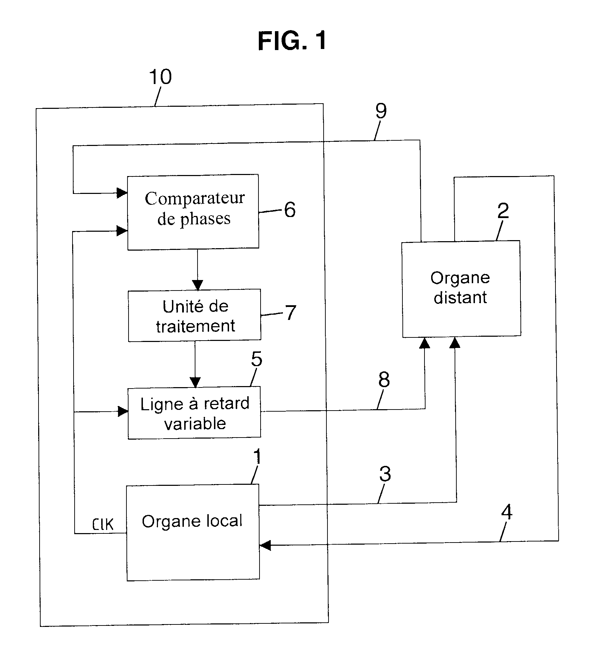

La figure 1 présente un exemple de dispositif de l'état de la technique pour synchroniser sur un signal d'horloge de référence, un échange de données avec un organe distant 2. Un organe local 1 envoie un ordre d'échange de données à l'organe distant 2, sur une ligne 3. L'organe distant 2 est par exemple une mémoire synchrone. L'organe local 1 est alors un contrôleur mémoire. L'échange de données entre l'organe local 1 et l'organe distant 2 se fait alors sur une ligne 4. L'organe local 1 est synchronisé par un signal d'horloge de référence CLK. L'organe distant 2 reçoit par une ligne 8, un signal d'horloge de fréquence identique au signal d'horloge de référence CLK, dans le but de synchroniser l'échange de données avec l'organe local 1, sur le signal d'horloge de référence CLK.

L'organe local 1 est matérialisé dans un circuit intégré 10. L'organe distant 2 est lui aussi matérialisé dans un autre circuit intégré. Les lignes 4 et 8 sont matérialisées par des pistes sur un circuit imprimé sur lequel sont disposées les circuits intégrés dans lesquels résident l'organe local 1 et l'organe distant 2. La piste de la ligne 8 introduit un retard sur le signal d'horloge de sorte que le signal reçu par l'organe distant 2, bien que de même fréquence que le signal d'horloge de référence CLK, est déphasé par rapport à celui-ci. De plus la piste de la ligne 4, introduit elle aussi un retard qui fait que, sans dispositif approprié, les données échangées sur la ligne 4, ont peu de chance d'être synchrones tant au niveau de l'organe local 1 que de l'organe distant 2. Le retard accumulé sur la ligne 8, éventuellement dans l'organe distant 2, puis sur la ligne 4, dépend de nombreux paramètres tels que la température, la longueur des pistes de la ligne 8 et de la ligne 4, de la technologie des circuits intégrés.

Le dispositif de la figure 1 comprend une ligne à retard variable 5, un comparateur de phase 6 et une unité de traitement 7. Le comparateur de phase 6 reçoit d'une part le signal d'horloge de référence CLK et d'autre part une image de signal d'horloge reçue par l'organe distant 2. Ici, l'image de signal reçue par l'organe distant 2, est transmise de l'organe distant 2 au comparateur de phase 6 par une ligne 9. Si la ligne 9 est matérialisée par une piste de circuit imprimé de longueur et de section identique à la piste de la ligne 4, on observe un cumul de retard sur la ligne 8, éventuellement dans l'organe distant 2 et sur la ligne 9, identique au cumul de retard sur la ligne 8, éventuellement dans l'organe distant 2 et sur la ligne 4. Ainsi, une différence de phase nulle sur le comparateur de phase 6, garantit une différence de phase nulle entre le signal d'horloge de référence CLK et les données échangées sur la ligne 4, au niveau de l'organe local 1. L'unité de traitement 7 reçoit du comparateur de phase 6, la différence de phase entre le signal d'horloge de référence CLK et le retour de la ligne 9. L'unité de traitement 7 commande la ligne à retard variable 5 de façon à générer un retard qui annule la différence de phase. La ligne à retard variable 5 recevant en entrée le signal d'horloge de référence CLK, génère en sortie un signal d'horloge retardé transmis à l'organe distant 2, sur la ligne 8. Ainsi la ligne à retard variable 5 compense le retard accumulé sur la ligne 8, éventuellement dans l'organe distant 2 et sur la ligne 9. De cette manière le signal en retour de la ligne 9 étant en phase avec le signal d'horloge de référence CLK, l'échange de données effectué sur la ligne 4, est en phase avec le signal d'horloge de référence CLK au niveau de l'organe local 1.

Cependant, il n'est pas toujours facile de matérialiser la ligne 9 sur une piste ayant rigoureusement le même comportement que la piste de la ligne 4. Lorsque le circuit intégré 10 est connecté à de nombreuses lignes 4, pour traiter simultanément plusieurs échanges de données, telles que les 32, les 64 bits, voir plus, d'un même mot mémoire, les différentes pistes du circuit imprimé qui matérialisent chacune une ligne 4, sont rarement de longueur identique. De plus, les nombreuses pistes du circuit imprimé, ne sont pas nécessairement soumises rigoureusement aux mêmes contraintes de température et les retards provoqués sur ces pistes peuvent varier. Pour des vitesses d'échange élevées telles que celles actuelles, et de façon plus aiguë encore pour celles du futur, ces petites différences représentent une importance considérable. D'autre part, pour des raisons de simplification des circuits et éventuellement aussi pour les raisons évoquées précédemment, l'organe distant 2 ne génère pas nécessairement un signal de retour sur la ligne 9 . Le dispositif présenté sur la figure 1 n'est alors pas entièrement satisfaisant.

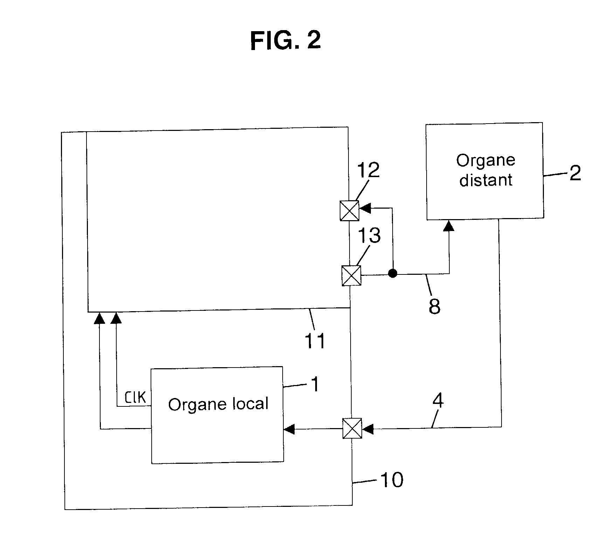

En référence à la figure 2, le circuit intégré 10 qui contient l'organe local 1, comprend un dispositif de synchronisation 11 différent de celui présenté sur la figure 1. Le dispositif de synchronisation 11 comprend une première borne 12 pour recueillir une image de signal d'horloge reçue par l'organe distant sur la ligne 8. Le signal d'horloge reçu par l'organe distant 2 sur la ligne 8 est ici émis à partir d'une deuxième borne 13.

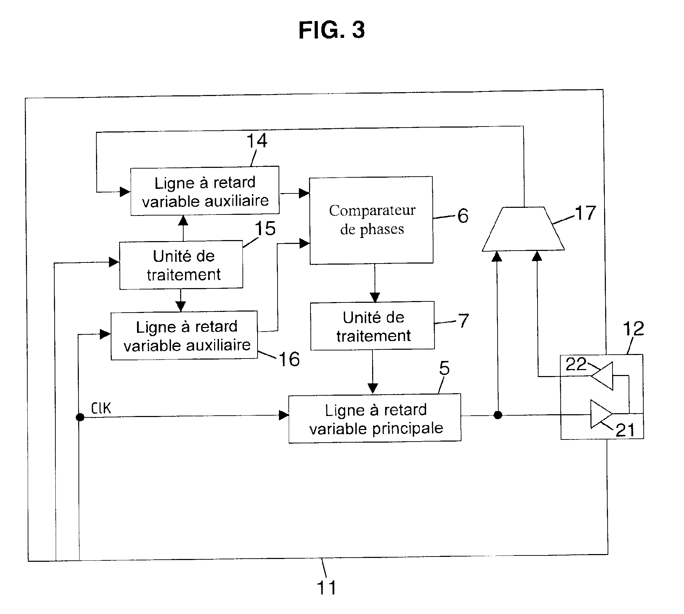

La figure 3 présente plus en détail le dispositif de synchronisation 11. On retrouve dans le dispositif de synchronisation 11, la ligne à retard variable 5 de la figure 1. La ligne à retard variable 5 est ici nommée ligne à retard variable principale pour la distinguer de deux autres lignes à retard variable 14 et 16, dites lignes à retard variable auxiliaires. La ligne à retard variable principale 5 est aussi commandée par une unité de traitement 7 à partir d'un comparateur de phase 6.

Une première entrée du comparateur de phase 6, est maintenant reliée à une sortie de la première ligne à retard variable auxiliaire 14. Une deuxième entrée du comparateur de phase 6 est reliée à une sortie de la ligne à retard variable auxiliaire 16. L'entrée de la ligne à retard variable auxiliaire 14 est reliée à une première borne 12 pour recueillir une image de signal d'horloge reçue par l'organe distant, via un commutateur 17. L'entrée de la ligne à retard variable auxiliaire 16 est reliée à l'entrée de la ligne à retard variable principale 5, de façon à recevoir le signal d'horloge de référence CLK comme la ligne à retard variable 5. Une deuxième unité de traitement 15 est agencée pour contrôler la première et la deuxième lignes à retard variable 14, 16. Le commutateur 17 inséré entre la borne 12 et la ligne à retard variable auxiliaire 14 permet aussi de connecter l'entrée de la ligne à retard variable auxiliaire 14 sur la sortie de la ligne à retard variable principale 5.

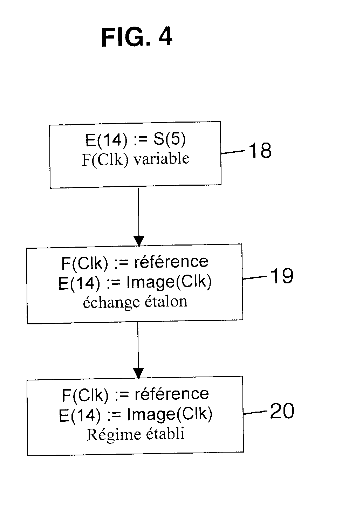

Le commutateur 17 permet de calibrer le dispositif de synchronisation 11 comme expliqué à présent en référence à la figure 4.

On distingue deux régimes de fonctionnement pour le dispositif de synchronisation 11. Un régime établi comprend une étape 20 pour synchroniser sur le signal d'horloge de référence, tout échange de données avec un organe distant. Un régime préparatoire qui précède le régime établi, comprend au moins une étape 18 pour calibrer le dispositif de synchronisation 11.

La ligne à retard variable principale 5 génère un retard de sa sortie sur son entrée qui est fonction du signal de commande reçu de l'unité de traitement 7 . La loi de variation du retard en fonction de la commande, est une fonction monotone d'ordre généralement plus grand que zéro. Pour une commande nulle, le retard généré est égal à un talon (délai résiduel) qui résulte des retards intrinsèques provoqués par les éléments de la ligne à retard variable principale 5. Lorsque le signal de commande augmente, le retard augmente de façon continue. De nombreux schémas connus existent pour faire varier de façon continue le retard en fonction du signal de commande, sans faire spécifiquement l'objet de la présente invention. Les lignes à retard variable auxiliaires 14 et 16 sont constituées de façon identiques à la ligne à retard variable principale 5. La loi de variation du retard dans les lignes à retard variables auxiliaires 14 et 16, est semblable à la loi de variation du retard dans la ligne à retard variable principale 5. On retrouve dans les lignes à retard variable auxiliaires 14 et 16, un talon qui résulte du retard intrinsèque des éléments de ces deux lignes à retard variable auxiliaires, éventuellement plus faible que le talon de la ligne à retard variable principale 5 si les lignes à retard variables auxiliaires 14 et 16 comportent moins d'éléments à retard. Les coefficients de variation des lignes à retard variable auxiliaires 14 et 16 sont proportionnelles aux coefficients de variation de la ligne à retard variable principale 5, éventuellement plus faibles si les lignes à retard variable auxiliaires 14 et 16 comportent moins d'éléments. Par construction, connaissant le nombre d'éléments à retard qui constituent les lignes à retard variable auxiliaires 14 et 16 et le nombre d'éléments à retard qui constituent la ligne à retard variable principale 5, il est possible de connaître la relation qui unit les coefficients des lois de variation de chacune des lignes à retard variable. L'unité de traitement 7 agit sur la ligne à retard variable principale 5 en boucle fermée. En effet, la commande de la ligne à retard variable principale 5, est asservie à une différence de phase nulle sur le comparateur de phase 6. Par contre, l'unité de traitement 15 agit sur les lignes à retard variable auxiliaires 14 et 16 en boucle ouverte. Il est donc intéressant de connaître la loi de variation du retard en fonction de la commande de l'unité de traitement 15, dans les lignes à retard variable auxiliaires 14 et 16. Les lignes à retard variable auxiliaires 14 et 16 sont rigoureusement identiques et comme elles sont comprises dans le même circuit intégré, la loi de variation du retard en fonction du signal de commande reçu de l'unité de traitement 15 est rigoureusement identique pour la ligne à retard variable auxiliaire 14 et pour la ligne à retard variable auxiliaire 16.

Dans l'étape 18, le commutateur 17 est mis dans un état pour connecter la sortie de la ligne à retard variable principale 5 sur l'entrée de la ligne à retard variable auxiliaire 14. Ainsi, le signal d'horloge retardé généré en sortie de la ligne à retard variable principale 5 est soumis au premier retard auxiliaire de la ligne à retard variable auxiliaire 14 avant d'être entré sur la première entrée du comparateur de phase 6. Dans l'étape 18, l'unité de traitement 15 envoie le même signal de commande à la ligne à retard variable auxiliaire 14 et à la ligne à retard variable auxiliaire 16. Ainsi, le deuxième retard auxiliaire généré par la ligne à retard variable auxiliaire 16 est pris égal au premier retard auxiliaire. De cette manière, la différence de phase reçue en entrée du comparateur de phase 6, est égale à l'image du retard généré par la ligne à retard variable principale 5. Dans l'étape 18, on fait varier la fréquence du signal CLK et pour chaque fréquence, on relève la valeur du signal de commande correspondante qui est reçue par la ligne à retard variable 5. Le signal de commande de la ligne à retard variable principale 5 qui annule la différence de phase en entrée du comparateur de phase 6, est le signal de commande qui génère un retard de la ligne à retard variable principale 5, égal à une période d'horloge du signal CLK. De la sorte, il est possible de reconnaître la loi de variation du retard principal en fonction du signal de commande. Par homothétie, on en déduit la loi de variation des retards auxiliaires en fonction du signal de commande de l'unité de traitement 15 pour les lignes à retard variable auxiliaires 14 et 16.

Dans l'étape 20, la fréquence F (Clk) du signal d'horloge CLK est positionnée à la fréquence de référence pour le régime établi d'échange de données. Le commutateur 17 est mis dans un état pour connecter la borne 12 sur l'entrée de la première ligne à retard variable auxiliaire 14. En régime établi, l'unité de traitement 15 envoie des signaux de commande différents à la ligne à retard variable auxiliaire 14 et à la ligne à retard variable auxiliaire 16. L'unité de traitement 7 commande la ligne à retard variable principale 5 de façon à annuler la différence de phase en entrée du comparateur de phase 6. Lorsque l'unité de traitement 15 envoie des signaux de commande de valeur identique à la ligne à retard variable auxiliaire 14 et à la ligne à retard variable auxiliaire 16, les retards auxiliaires sont égaux de sorte que le signal en sortie du commutateur 17 est en phase avec le signal d'horloge de référence Clk. Le signal en sortie du commutateur 17 étant égal à l'image du signal d'horloge reçu par l'organe distant, l'image du signal d'horloge reçu par l'organe distant est en phase avec le signal d'horloge de référence Clk. Le cumul du retard principal généré par la ligne à retard variable 5 et du retard inconnu du signal d'horloge reçu par l'organe distant par rapport au signal retardé en sortie de la ligne à retard variable principale 5, est alors égal à un nombre entier de période du signal d'horloge de référence Clk. Lorsque l'unité de traitement 15 envoie à la ligne à retard variable auxiliaire 14 un signal de commande supérieur à celui envoyé à la ligne à retard variable auxiliaire 16, le retard auxiliaire de la ligne 14 est supérieur au retard auxiliaire de la ligne 16. L'unité de traitement 7 modifie alors son signal de commande de façon à diminuer le retard principal de la ligne 5 pour maintenir nulle la différence de phase en entrée du comparateur de phase 6. Ainsi, le signal retardé en sortie de la ligne à retard variable principale 5 est moins retardé que précédemment. Le signal d'horloge reçu par l'organe distant est par conséquent lui aussi moins retardé. La diminution de retard sur le signal d'horloge reçu par l'organe distant, est égale en valeur absolue à l'augmentation de retard auxiliaire généré par la ligne à retard variable 14 par rapport à celui généré par la ligne à retard variable auxiliaire 16. Lorsque l'unité de traitement 15 envoie à la ligne à retard variable auxiliaire 16 un signal de commande plus grand que celui envoyé à la ligne à retard variable auxiliaire 14, le retard auxiliaire généré par la ligne 14 est inférieur au retard auxiliaire généré par la ligne 16. L'unité de traitement 7 génère un signal de commande à destination de la ligne à retard variable principale 5 de façon à augmenter le retard pour annuler la différence de phase en entrée du comparateur de phase 6. Le signal retardé en sortie de la ligne à retard variable principale 5, est retardé avec un retard plus grand que précédemment par rapport au signal d'horloge de référence Clk. Le signal d'horloge reçu par l'organe distant est par conséquent, lui aussi retardé avec un retard plus grand que précédemment. L'augmentation de retard sur le signal d'horloge reçu par l'organe distant est égal en valeur absolue à la diminution de retard auxiliaire généré par la ligne à retard variable auxiliaire 14 par rapport à celui généré par la ligne à retard variable auxiliaire 16. Connaissant la loi de variation des retards dans les lignes à retard variable auxiliaires 14 et 16, il est possible de positionner les signaux de commande générés par l'unité de traitement 15 avec précision de façon à imposer une différence entre les retards auxiliaires générés par la ligne 14 et la ligne 16. Les signaux de commande de l'unité de traitement 15 étant choisis dans une plage de variations continues des retards en fonction des signaux de commande des lignes à retard variables auxiliaires 14 et 16, il est possible de faire varier avec précision positivement et négativement autour de zéro, y compris pour une valeur nulle, la différence de retard auxiliaire entre les sorties de la ligne à retard variable auxiliaire 14 et de la ligne à retard variable auxiliaire 16. Le signal de commande de la ligne à retard variable principal 5 par l'unité de traitement 7 étant situé lui aussi dans une plage de variations continue des retards en fonction du signal de commande, le retard principal est donc lui aussi ajusté avec précision autour d'une valeur moyenne. En sortie du commutateur 17, l'image de signal reçue par l'organe distant est décalée par rapport au signal d'horloge de référence Clk de la valeur égale et opposée à la différence du retard auxiliaire généré par la ligne 14 par rapport au retard auxiliaire généré par la ligne 16. Il est ainsi possible de contrôler la première et la deuxième ligne à retard variable auxiliaire de façon à ce que l'image de signal reçue par l'organe distant est décalée par rapport au signal d'horloge de référence, d'une phase propre à synchroniser l'échange de données sur le signal d'horloge de référence.

Si on connaît ce décalage a priori, par exemple à partir de données constructeur de l'organe distant 2 et de la topologie du circuit imprimé, il suffit d'introduire dans l'unité de traitement 15 des valeurs pré-établies pour les commandes de lignes à retard variable auxiliaires 14 et 16.

Avantageusement, en particulier si on ne connaît pas a priori le décalage nécessaire à une synchronisation correcte du transfert de données, le procédé comprend une deuxième étape 19 de régime préparatoire. Dans l'étape 19, l'organe local 1 active un échange de données connues avec l'organe distant et réitère si besoin cette activation en faisant varier le premier ou le deuxième retard auxiliaire jusqu'à détecter une synchronisation d'échange de données connues. Par exemple ces données connues sont égales à une valeur étalon stockée dans l'organe local 1 et dans l'organe distant 2. Ceci permet de faire un asservissement en boucle fermée par l'unité de traitement 15 des commandes de lignes à retard variable auxiliaires 14 et 16. Lorsque l'échange de données correspond à la valeur étalon, le décalage commandé par l'unité de traitement 15 convient à une bonne synchronisation d'échange de données. Ce décalage est retenu dans l'unité de traitement 15 pour ensuite être utilisé dans l'étape 20 en régime établi.

Il se peut qu'il y ait plusieurs décalages possibles pour synchroniser l'échange de données. Dans ce cas, l'étape 19 peut être reconduite jusqu'à obtention des limites de la plage de fonctionnement. Ceci permet d'après la reconnaissance de la loi de variation de la ligne à retard 5 déterminée par l'étape 18, de retenir le meilleur décalage à ensuite utiliser dans l'étape 20.

Sur la figure 2, le signal retardé généré par la ligne à retard variable principale 5 est émis en sortie du circuit intégré 10 sur une borne 13 à destination de l'organe distant. L'image de signal d'horloge reçue par l'organe distant est prélevée sur la ligne 8 pas nécessairement à proximité de l'organe distant 2. En effet ce qui provoque le retard est moins le chemin parcouru de la borne 13 jusqu'à l'organe distant 2 que la capacité et l'auto-inductance de la piste qui matérialise la ligne 8. C'est essentiellement l'effet capacitif et l'effet inductif de la piste matérialisant la ligne 8 qui provoque un retard dû au temps de montée du signal. Ce qui compte est que l'image de signal reçue par l'organe distant 2 soit prélevée sur la ligne 8 pour être introduite dans le circuit intégré 10 par la borne 12. On note que le schéma de la figure 2 permet de prélever l'image de signal d'horloge reçue par l'organe distant en un point quelconque du circuit imprimé mais nécessite de faire un câblage supplémentaire sur le circuit intégré 10. Avantageusement sur le schéma représenté en figure 3, la borne 13 est confondue avec la borne 12 de façon à faciliter le câblage en sortie du circuit intégré 10. Un premier amplificateur d'isolation galvanique 21 a une entrée reliée à la sortie de la ligne à retard variable principale 5 et sa sortie prévue pour être reliée à une piste de transmission vers l'organe distant. La sortie de l'amplificateur 21 joue le rôle de la borne 14. Un deuxième amplificateur d'isolation galvanique 22 a une entrée reliée à la sortie du premier amplificateur d'isolation galvanique 21 et une sortie reliée à l'entrée de la première ligne à retard variable auxiliaire via le commutateur 17. L'entrée de l'amplificateur 22 joue le rôle de la borne 12.

## Revendications

1. Dispositif (11) pour synchroniser sur un signal d'horloge de référence, un échange de données avec un organe distant (2), comprenant une ligne à retard variable (5) dite principale, contrôlée par une première unité de traitement (7) à partir d'un comparateur de phase (6) pour générer un signal d'horloge retardé transmis à l'organe distant (2), une entrée de ladite ligne à retard variable principale recevant le signal d'horloge de référence, **caractérisé en ce qu'**il comprend:
- une première borne (12) pour recueillir une image de signal d'horloge reçu par l'organe distant,
- une première ligne à retard variable auxiliaire (14) dont une entrée est reliée à ladite première borne et dont une sortie est reliée à une première entrée du comparateur de phase,
- une deuxième ligne à retard variable auxiliaire (16) dont une entrée est reliée à l'entrée de ligne à retard variable principale et dont une sortie est reliée à une deuxième entrée du comparateur de phase,
- une deuxième unité de traitement (15) agencée pour contrôler la première et la deuxième ligne à retard variable auxiliaire de façon à ce que ladite image de signal reçu par l'organe distant est décalée par rapport au signal d'horloge de référence, d'une phase propre à synchroniser l'échange de données sur le signal d'horloge de référence.

2. Dispositif selon la revendication 1, **caractérisé en ce qu'**il comprend un commutateur (17) inséré entre ladite première borne et ladite entrée de première ligne à retard variable auxiliaire (14) de façon à pouvoir connecter ladite entrée de première ligne à retard variable (14) sur une sortie de ladite ligne à retard variable principale (5).

3. Dispositif selon la revendication 1 ou 2, **caractérisé en ce que** la deuxième unité de traitement (15) comprend une entrée pour recevoir un signal de reconnaissance de données pour ajuster le retard de la première ou de la deuxième ligne à retard variable auxiliaire (14,16) de façon à ce que le signal de reconnaissance de données indique une concordance de données.

4. Dispositif selon l'une des revendications précédentes, **caractérisé en ce que** ladite première borne (12) comprend:
- un premier amplificateur d'isolation galvanique (21) dont une entrée est reliée à une sortie de ladite ligne à retard variable principale (5) et dont une sortie est prévue pour être reliée à une piste de transmission vers l'organe distant (2),
- un deuxième amplificateur d'isolation galvanique (22) dont une entrée est reliée à ladite sortie du premier amplificateur d'isolation galvanique (21) et dont une sortie est reliée à l'entrée de ladite première ligne à retard variable auxiliaire (14).

5. Procédé pour synchroniser sur un signal d'horloge de référence, un échange de données avec un organe distant (2), en générant un signal d'horloge retardé transmis à l'organe distant avec un retard dit principal par rapport au signal d'horloge de référence, ledit retard principal étant fonction d'un signal de commande pour annuler une différence de phases reçues en entrée d'un comparateur de phases (6), **caractérisé en ce que**:
- une image de signal d'horloge reçu par l'organe distant, est soumise à un premier retard dit auxiliaire en régime établi (20),
- le signal d'horloge de référence est soumis à un deuxième retard dit auxiliaire,
- ladite différence de phases reçues en entrée du comparateur de phases (6) est une différence de phase entre l'image de signal d'horloge reçu soumise au dit premier retard auxiliaire et le signal d'horloge de référence soumis au dit deuxième retard auxiliaire, de sorte que ladite image de signal d'horloge reçu par l'organe distant (2), est décalée par rapport au signal d'horloge de référence, d'une phase propre à synchroniser l'échange de données sur le signal d'horloge de référence en régime établi (20).

6. Procédé selon la revendication 5, **caractérisé en ce que** dans une première étape (18) de régime préparatoire hors régime établi:
- ledit signal d'horloge retardé est soumis au dit premier retard auxiliaire,
- ledit deuxième retard auxiliaire est pris égal au dit premier retard auxiliaire,
- différentes valeurs du dit signal de commande sont relevées, chacune pour une fréquence différente du signal d'horloge de référence, de façon à reconnaître une loi de variation du dit retard principal, alors égal à une période d'horloge, en fonction du signal de commande.

7. Procédé selon la revendication 6, **caractérisé en ce que** dans une deuxième étape (19) de régime préparatoire:
- l'image de signal d'horloge reçu par l'organe distant, est soumise au dit premier retard auxiliaire,
- une succession d'au moins un échange de données connues avec l'organe distant, est activée en faisant varier le premier et ou le deuxième retard auxiliaire jusqu'à détecter une synchronisation d'échange de données connues.

8. Procédé selon la revendication 6, **caractérisé en ce que**, hors de ladite première étape (18) de régime préparatoire, deux valeurs sont attribuées chacune respectivement au premier et au deuxième retard auxiliaire de sorte que la différence des deux valeurs correspond à une fenêtre a priori connue de synchronisation d'échanges de données.
